# DEMANDE DE BREVET EUROPEEN

(11) **EP 0 712 774 A1**
(43) Date de publication de la demande: **22.05.1996**
(21) Numéro de dépôt: 95402494.9
(22) Date de dépôt: 07.11.1995
(51) Int. Cl.: B62D 1/10

(54) **Dispositif de fixation d'un volant de direction de véhicule automobile sur un arbre de direction**

(30) Priorité: 17.11.1994 FR 9413781
(71) Demandeur: ECIA - EQUIPEMENTS ET COMPOSANTS POUR L'INDUSTRIE AUTOMOBILE, F-25400 Audincourt (FR)
(72) Inventeur: Heranney, Yves, F-25200 Montbeliard (FR); Henigue, Christian, F-25400 Audincourt (FR)
(74) Mandataire: Habasque, Etienne Joel Jean-François

(57) **Abrégé**

Ce dispositif, dans lequel le volant (1) comporte un coussin central (2) équipé d'un module à sac gonflable intégré (3), est caractérisé en ce qu'il comporte un manchon intermédiaire (11) fixé sur l'arbre (6) et comportant des premiers moyens (12) d'immobilisation angulaire adaptés pour coopérer avec des moyens complémentaires (13) de l'arbre, et des seconds moyens (17) d'immobilisation angulaire adaptés pour coopérer avec des moyens complémentaires (18) de l'armature de volant, pour permettre un réglage de la position angulaire du volant sur l'arbre et des moyens de fixation (21,22) de l'armature de volant sur le manchon (11).

## Description

La présente invention concerne un dispositif de fixation d'un volant de direction de véhicule automobile sur un arbre de direction.

Plus particulièrement, l'invention concerne un dispositif de fixation d'un volant qui comporte un coussin central équipé d'un module à sac gonflable intégré, sur un arbre de direction.

On sait que la fixation de tels volants de direction à module à sac gonflable intégré sur un arbre de direction, est relativement difficile, car l'intégration du module à sac gonflable dans le volant empêche d'avoir accès à l'extrémité correspondante de l'arbre de direction pour disposer, de manière classique, par exemple un écrou de serrage du volant sur une portion filetée de celle-ci.

Différents dispositifs ont donc été développés dans l'état de la technique, pour permettre la fixation du volant par le côté de celui-ci opposé à celui situé en face du conducteur du véhicule.

Cependant, tous les dispositifs proposés dans l'état de la technique présentent l'inconvénient de ne pas permettre un réglage de la position angulaire du volant par rapport à l'arbre de direction pour rattraper les différents décalages possibles lors du montage du volant.

Le but de l'invention est donc de résoudre ces problèmes.

A cet effet, l'invention a pour objet un dispositif de fixation d'un volant de direction de véhicule automobile sur un arbre de direction, dans lequel le volant comporte un coussin central équipé d'un module à sac gonflable intégré, caractérisé en ce qu'il comporte un manchon intermédiaire fixé sur l'arbre et comportant des premiers moyens d'immobilisation angulaire adaptés pour coopérer avec des moyens complémentaires de l'arbre, et des seconds moyens d'immobilisation angulaire adaptés pour coopérer avec des moyens complémentaires d'une armature de volant, pour permettre un réglage de la position angulaire du volant sur l'arbre et des moyens de fixation de l'armature de volant sur le manchon.

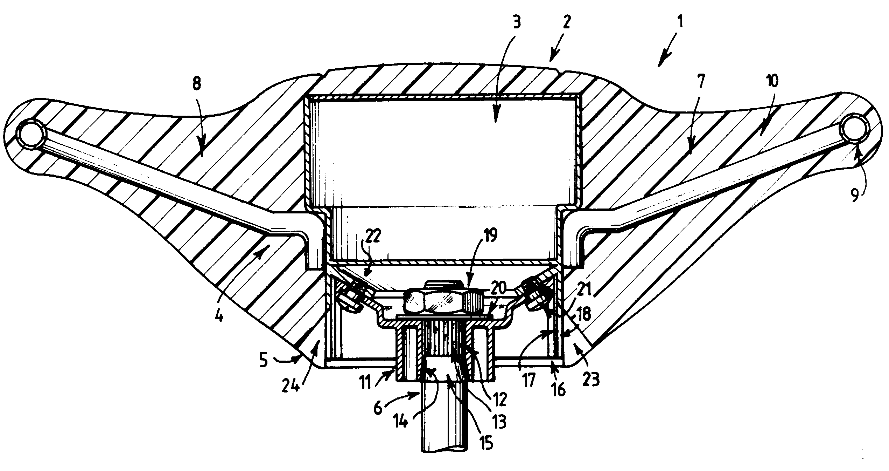

L'invention sera mieux comprise à l'aide de la description qui va suivre, donnée à titre d'exemple et faite en se référant au dessin annexé qui représente une vue schématique en coupe illustrant la structure d'un dispositif de fixation d'un volant de direction selon l'invention.

On reconnaît en effet sur cette figure un volant de direction de véhicule automobile, désigné par la référence générale 1.

Ce volant de direction comporte un coussin central désigné par la référence générale 2, dans lequel est intégré un module à sac gonflable 3 de structure classique.

Ce module à sac gonflable est fixé sur l'armature 4 du volant, cette armature comportant une portion centrale 5 destinée à permettre sa fixation sur un arbre de direction 6, et à partir de laquelle s'étendent des bras, par exemple 7 et 8, de support d'une jante annulaire de volant 9.

Le garnissage du volant, désigné par la référence générale 10, est formé d'une seule pièce autour de l'ensemble de ces éléments, c'est-à-dire de l'armature de volant et du module à sac gonflable, cette structure étant appelée volant à module à sac gonflable intégré.

Le dispositif de fixation selon l'invention, comporte un manchon intermédiaire tubulaire désigné par la référence générale 11, adapté pour être engagé sur l'extrémité correspondante de l'arbre 6 et comportant des premiers moyens d'immobilisation axiale internes 12 adaptés pour coopérer avec des moyens complémentaires 13 de l'arbre 6 pour assurer l'immobilisation angulaire de ce manchon sur cette extrémité d'arbre.

On notera également que ce manchon peut comporter une portion tronconique 14 de forme complémentaire à une portion tronconique correspondante 15 de l'arbre pour assurer une immobilisation axiale dans le sens correspondant du manchon sur l'arbre, de manière classique.

On notera également que ces premiers moyens d'immobilisation angulaire 12 du manchon et les moyens complémentaires 13 de l'arbre présentent un premier pas déterminé.

Ce manchon comporte également une jupe périphérique 16 de plus grand diamètre que la portion disposée autour de l'arbre, cette jupe comportant par exemple sur sa surface externe, des seconds moyens d'immobilisation angulaire désignés par la référence générale 17, et adaptés pour coopérer avec des moyens complémentaires 18 d'une coiffe de l'armature de volant pour assurer une immobilisation de l'armature du volant sur le manchon et donc sur l'arbre de direction.

On notera que ces seconds moyens d'immobilisation et complémentaires sont différents des premiers et présentent par exemple un second pas différent et par exemple inférieur au premier pas de ces premiers moyens d'immobilisation et complémentaires.

Ceci permet lors du montage du volant sur l'arbre de direction, d'obtenir un réglage fin de la position angulaire du volant par rapport à l'arbre de direction, dans un premier temps par engagement du manchon autour de la portion d'extrémité d'arbre correspondante puis dans un second temps par engagement de l'armature du volant sur ce manchon.

La fixation du manchon 11 sur l'extrémité d'arbre est obtenue par un écrou 19 vissé sur une extrémité filetée correspondante de l'arbre, en saillie au-delà du manchon, cet écrou étant associé à une rondelle d'appui 20.

La fixation de l'armature sur le manchon est quant à elle assurée par l'intermédiaire de vis par exemple 21 et 22, adaptées pour s'engager dans des évidements du manchon, formées par exemples par des lumières allongées de celui-ci et pour coopérer avec des moyens complémentaires tels que des écrous fixés sur l'armature du volant, pour obtenir le serrage et donc la fixation de cette armature sur ce manchon.

On notera que ces vis 21 et 22 sont engagées par le côté du volant opposé à celui en regard du conducteur au travers d'évidements correspondants 23 et 24 ménagés dans le garnissage de celui-ci.

On conçoit donc que la première opération de montage de ce dispositif sur l'arbre de direction, consiste à mettre en place le manchon 11 autour de l'extrémité d'arbre et à fixer celui-ci en position par l'intermédiaire de l'écrou 19 et de la rondelle 20.

Une fois cette opération réalisée, le volant, et plus particulièrement l'armature de celui-ci, est alors engagé sur ce manchon dans la position angulaire souhaitée, pour obtenir le réglage en position angulaire du volant par rapport à l'arbre, en utilisant par exemple le pas inférieur des seconds moyens d'immobilisation et complémentaires de ce manchon et de l'armature, respectivement.

Une fois la position optimale obtenue, il suffit alors de serrer l'armature du volant sur le manchon par l'intermédiaire des vis 21 et 22 pour obtenir la fixation complète de l'armature du volant sur le manchon et donc sur l'arbre de direction.

Il va de soi bien entendu que différents modes de réalisation de ce manchon peuvent être envisagés de même que d'autres modes de fixation du manchon sur l'arbre et de l'armature sur le manchon.

Par ailleurs, les moyens d'immobilisation et complémentaires de l'arbre, du manchon et de l'armature du volant peuvent être formés par des cannelures complémentaires.

Il va de soi également que les premiers et seconds moyens d'immobilisation angulaire et complémentaires peuvent être différents en nombre de cannelures pour obtenir le réglage souhaité.

## Revendications

1. Dispositif de fixation d'un volant de direction de véhicule automobile sur un arbre de direction, dans lequel le volant (1) comporte un coussin central (2) équipé d'un module à sac gonflable intégré (3), caractérisé en ce qu'il comporte un manchon intermédiaire (11) fixé sur l'arbre (6) et comportant des premiers moyens (12) d'immobilisation angulaire adaptés pour coopérer avec des moyens complémentaires (13) de l'arbre, et des seconds moyens (17) d'immobilisation angulaire adaptés pour coopérer avec des moyens complémentaires (18) de l'armature de volant, pour permettre un réglage de la position angulaire du volant sur l'arbre et des moyens de fixation (21,22) de l'armature de volant sur le manchon (11).

2. Dispositif de fixation selon la revendication 1, caractérisé en ce que le manchon (11) est fixé sur l'arbre par l'intermédiaire d'un écrou (19) vissé sur une extrémité filetée de l'arbre de direction (6), en saillie au-delà du manchon (11).

3. Dispositif de fixation selon la revendication 1 ou 2, caractérisé en ce que les moyens de fixation de l'armature sur le manchon comprennent des vis de serrage (21,22) engagées dans le volant par le côté de celui-ci opposé à son côté en regard du conducteur du véhicule, et s'engageant dans des évidements du manchon (11), afin de coopérer avec des moyens complémentaires de l'armature du volant pour assurer le serrage de celle-ci sur le manchon.

4. Dispositif de fixation selon l'une quelconque des revendications précédentes, caractérisé en ce que les seconds moyens d'immobilisation angulaire (17) du manchon (11) sont ménagés sur la surface externe d'une jupe périphérique de celui-ci.

5. Dispositif de fixation selon l'une quelconque des revendications précédentes, caractérisé en ce que les premiers et seconds moyens d'immobilisation angulaire et complémentaires sont différents.

6. Dispositif de fixation selon la revendication 5, caractérisé en ce que les premiers et seconds moyens d'immobilisation angulaire et complémentaires présentent des pas différents.
